# EUROPÄISCHE PATENTSCHRIFT

(11) **EP 4 226 055 B1**
(45) Veröffentlichungstag und Bekanntmachung des Hinweises auf die Patenterteilung: **18.03.2026**
(21) Anmeldenummer: 22737734.8
(22) Anmeldetag: 09.06.2022
(51) Int. Cl.: F16B 5/02

(54) **VORRICHTUNG ZUR BEFESTIGUNG AN EINEM BAUTEIL**
DEVICE FOR FASTENING TO A COMPONENT
DISPOSITIF DE FIXATION À UN COMPOSANT

(30) Priorität: 28.06.2021 DE 102021206696
(43) Veröffentlichungstag der Anmeldung: 16.08.2023
(73) Patentinhaber: Springfix Befestigungstechnik GmbH, 73084 Salach (DE)
(72) Erfinder: HIPPELI, Sebastian, 97647 Nordheim vor der Rhön (DE); ECKLE, Anja, 73333 Gingen an der Fils (DE)
(74) Vertreter: Ullrich & Naumann PartG mbB
(86) Internationale Anmeldenummer: PCT/DE2022/200114
(87) Internationale Veröffentlichungsnummer: WO 2023/274461

(56) Entgegenhaltungen:
- DE-A1- 102014 113 126
- DE-B3- 10 362 429
- DE-U1- 20 016 150
- JP-A- 2011 033 164

## Beschreibung

Die Erfindung betrifft eine Vorrichtung zur Befestigung an einem Bauteil mit einem Grundkörper und einem Ausgleichselement, wobei das Ausgleichselement mit dem Grundkörper über ein Gewinde verbunden ist und wobei das Ausgleichselement einen Durchgang mit einer Mitnahmeeinrichtung für eine Schraube aufweist.

Vorrichtungen der in Rede stehenden Art sind seit Jahren aus der Praxis bekannt und dienen beispielsweise der Fixierung von zwei Bauteilen, deren Abstand zueinander toleranzbehaftet ist. Entsprechende Vorrichtungen werden unter anderem zur Montage von Scheinwerfern in einem Kraftfahrzeug verwendet.

Bei den bekannten Vorrichtungen ist unterhalb des Grundkörpers eine Mutter angeordnet, in die eine Schraube eingeschraubt wird. Mit dem Eindrehen der Schraube in das Gewinde der Mutter wird das Ausgleichselement aufgrund einer Mitnahmeeinrichtung, die die Schraube und das Ausgleichselement miteinander verbindet, ebenfalls gedreht. Durch eine gegensinnige Drehrichtung der Schraubverbindung von Grundkörper und Ausgleichselement und des Gewindes der Mutter wird mit dem Eindrehen der Schraube das Ausgleichselement aus dem Grundkörper herausgeschraubt, bis es mit seinem Anschlagbereich an ein zweites Bauteil anstößt. Somit ermöglicht diese Konstruktion einen Toleranzausgleich bei der Fixierung von zwei Bauteilen, deren Abstand zueinander nicht eindeutig bestimmt ist, und werden daher auch aus Toleranz-Ausgleichs-Element bezeichnet.

Entsprechende Vorrichtungen sind beispielsweise aus der FR 2 792 039 B1 und der DE 100 34 968 A1 vorbekannt.

Die DE 200 16 150 U1 beschreibt ein Toleranz-Ausgleichselement, bei dem der Grundkörper aus einem Grundelement aus Metall und einem Haltering aus Kunststoff besteht. Die JP 2011 033 164 A offenbart ein Toleranzausgleichselement mit einem Ausgleichskörper einem Grundelement und einem Haltering. Des Weiteren zeigen die DE 103 62 429 B3 und die DE 10 2014 113 126 A1 ähnliche Vorrichtungen.

Die Montage solcher Vorrichtungen erfolgt beispielsweise im Automobilbau in Fließfertigung und ist daher in relativ kurz bemessener Zeit zu bewerkstelligen. Auch ist es denkbar, dass die Vorrichtungen automatisiert angebracht werden. Dabei ist problematisch, dass die Vorrichtungen bei der Montage recht hohen Kräften und Drehmomenten ausgesetzt sind und daher Beschädigungen auftreten können. Sofern die Vorrichtungen aufgrund der Beschädigung nicht ordnungsgemäß befestigt werden können, müssen diese ausgetauscht werden, wodurch die Produktion aufgehalten wird, was unbedingt zu vermeiden ist.

Der vorliegenden Erfindung liegt daher die Aufgabe zugrunde, eine Vorrichtung der eingangs genannten Art derart auszugestalten und weiterzubilden, dass mit konstruktiv einfachen Mitteln eine zuverlässige Befestigung in kurzer Zeit möglich ist und Beschädigungen der Vorrichtung während der Montage vermieden werden.

Erfindungsgemäß wird die voranstehende Aufgabe durch die Merkmale des Anspruches 1 gelöst. Danach ist die in Rede stehende Vorrichtung zur Befestigung an einem Bauteil mit einem Grundkörper und einem Ausgleichselement, wobei das Ausgleichselement mit dem Grundkörper über ein Gewinde verbunden ist, wobei das Ausgleichselement einen Durchgang mit einer Mitnahmeeinrichtung für eine Schraube aufweist, wobei der Grundkörper ein Grundelement und einen formschlüssig mit dem Grundelement verbundenen Haltering aufweist, und wobei der Haltering mindestens eine Nut aufweist und wobei das Grundelement mindestens eine zu der Nut komplementär ausgebildete Rippe aufweist, um einen Formschluss zu erzielen, dadurch gekennzeichnet, dass mindestens zwei Nuten eine unterschiedliche Form aufweisen und/oder dass mindestens zwei Rippen eine unterschiedliche Form aufweisen.

In erfindungsgemäßer Weise ist erkannt worden, dass die zugrundeliegende Aufgabe gelöst werden kann, indem das Grundelement formschlüssig mit dem Haltering verbunden ist. Dabei erkannt worden, dass durch einen Formschluss zwischen Grundelement und Haltering auch bei höheren Drehmomenten verhindert wird, dass diese Bauteile sich voneinander lösen, wie dies beispielsweise bei aus dem Stand der Technik bekannten Vorrichtungen der Fall ist, welche lediglich durch einen Kraftschluss aneinander festgelegt werden. Des Weiteren wird durch die mehrteilige Ausgestaltung des Grundkörpers der Vorteil erzielt, dass die einzelnen Bestandteile einfacher herzustellen sind, beispielsweise ein Gewinde an dem Grundelement, das komplementär zu einem Gewinde an dem Ausgleichselement ausgebildet ist.

Es wird darauf hingewiesen, dass die Schraube nicht zwangsweise Teil der beanspruchten Vorrichtung gemäß Anspruch 1 sein muss. Jedoch ist es möglich, dass die Schraube Teil dieser Vorrichtung ist.

In erfindungsgemäßer Weise weist der Haltering mindestens eine Nut bzw. Ausnehmung auf und weist das Grundelement mindestens eine zu der Nut komplementär ausgebildete Rippe bzw. eine Nase oder einen Vorsprung auf, um einen Formschluss zu erzielen. Die Nut und die Rippe könnten zumindest im Wesentlichen parallel zur Einführrichtung der Schraube bzw. zur Erstreckungsrichtung des Durchgangs verlaufen.

In weiter erfindungsgemäßer Weise weisen mindestens zwei Nuten eine unterschiedliche Form auf und/oder weisen mindestens zwei Rippen eine unterschiedliche Form auf. Dadurch kann auf einfache Weise erreicht werden, dass der Haltering und das Grundelement lediglich in einer bestimmten Position bzw. in bestimmten Positionen miteinander verbunden werden können.

Gemäß einer weiteren vorteilhaften Ausgestaltung kann in dem Durchgang mindestens ein Zentrierelement zur Ausrichtung der Schraube ausgebildet sein. Dabei ist erkannt worden, dass für eine sichere und schnelle Montage der Vorrichtung die Schraube möglichst zentral in den Durchgang einzuführen ist. Hierdurch wird erreicht, dass die Schraube nicht an der Mitnahmeeinrichtung verkantet und diese somit durch die Einführbewegung beschädigt. Weiterhin ist erkannt worden, dass eine zentrierte Einführung der Schraube auf besonders einfache Weise gewährleistet werden kann, indem mindestens ein Zentrierelement in bzw. an dem Durchgang ausgebildet ist. Dadurch wird die Schraube beim Einführen zunächst derart ausgerichtet, dass sie ohne ein Verkanten an der Mitnahmeeinrichtung vorbeigeführt werden kann.

In vorteilhafter Weise kann das Zentrierelement als in Radialrichtung in den Durchgang hineinreichende Zentrierrippe bzw. Zentriernase oder Zentriervorsprung ausgebildet sein. Die Zentrierrippe verläuft dabei zumindest im Wesentliche parallel zur Einführrichtung der Schraube bzw. zur Erstreckungsrichtung des Durchgangs. Eine solche Konstruktion ist besonders einfach herzustellen und gewährleistet, dass die Schraube korrekt ausgerichtet in die Vorrichtung eingeführt wird.

In weiter vorteilhafter Weise können mehrere Zentrierelemente, insbesondere Zentrierrippen, Zentriernase oder Zentriervorsprünge, in Umfangsrichtung des Durchgangs angeordnet sein. Somit kann die Schraube in Umfangsrichtung von mehreren Rippen geführt sein, wodurch die Ausrichtung besonders exakt einstellbar ist. Vorzugsweise können die Zentrierelemente, beispielsweise die Zentrierrippen, jeweils äquidistant zu dem nächstliegenden Zentrierelement, beispielsweise der nächstliegenden Zentrierrippe, ausgebildet sein. Beispielsweise könnten sechs Zentrierrippen jeweils in einem Winkel von 60° um den Durchgang herum angeordnet sein. Alternativ ist es denkbar, dass ein einziges Zentrierelement angeordnet ist, dass in Umfangsrichtung, vorzugsweise vollständig, um den Durchgang herum verläuft und sich in Radialrichtung in den Durchgang erstreckt.

In besonders vorteilhafter Weise kann das Zentrierelement einteilig mit dem Ausgleichselement ausgebildet sein. Eine solche Konstruktion ist besonders einfach in der Herstellung. Beispielsweise könnten das Ausgleichselement und das Zentrierelement aus Kunststoff bestehen und insbesondere im Spritzgussverfahren hergestellt sein.

Um die Schraube noch einfacher in den Durchgang einführen zu können, kann das freie Ende des Zentrierelements eine Fase aufweisen. Die Fase dient somit als Einführhilfe für die Schraube.

In weiter vorteilhafter Weise kann die Mitnahmeeinrichtung als Federelement ausgebildet sein. Bei dem Federelement kann es sich um eine Federklemme handeln, die beispielsweise als gebogenes Metallteil hergestellt ist. Wesentlich ist, dass die Mitnahmeeinrichtung eine kraftschlüssige Verbindung mit der Schraube eingeht, um das Ausgleichselement bei einer Drehung der Schraube mitzudrehen.

Gemäß einer vorteilhaften Ausgestaltung kann die Mitnahmeeinrichtung formschlüssig mit dem Ausgleichselement verbunden sein. Dadurch wird erreicht, dass die Mitnahmeeinrichtung auf besonders einfache Weise ausreichend fest mit dem Ausgleichselement verbunden ist, so dass dieses der Drehbewegung der Schraube folgen kann. Ein "Rutschen" zwischen Ausgleichselement und Mitnahmeeinrichtung wird verhindert.

In vorteilhafter Weise kann mindestens ein Befestigungselement in Radialrichtung in den Durchgang hineinragen, um die Mitnahmeeinrichtung formschlüssig mit dem Ausgleichselement zu verbinden. Ein solches Befestigungselement ist besonders einfach herzustellen, kann beispielsweise einteilig mit dem Ausgleichselement ausgebildet sein.

In besonders vorteilhafter Weise kann das Befestigungselement als Befestigungsrippe bzw. Befestigungsnase oder Befestigungsvorsprung ausgebildet sein, die vorzugsweise in Radialrichtung in den Durchgang hineinragt. Die Befestigungsrippe kann zumindest im Wesentlichen parallel zur Einführrichtung der Schraube bzw. zur Erstreckungsrichtung des Durchgangs verlaufen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung eine geschnittene Ansicht einer erfindungsgemäßen Vorrichtung im Grundzustand,
- Fig. 2: in einer schematischen Darstellung eine geschnittene Ansicht der Vorrichtung gemäß Fig. 1 im ausgedrehten Zustand,
- Fig. 3: in einer schematischen Darstellung eine weitere Ansicht der Vorrichtung gemäß Fig. 1,
- Fig. 4: in einer schematischen Darstellung eine Draufsicht der Vorrichtung gemäß Fig. 1,
- Fig. 5: in einer schematischen Darstellung eine weitere Draufsicht der Vorrichtung gemäß Fig. 1,
- Fig. 6: in einer schematischen Darstellung eine geschnittene Ansicht des Grundkörpers und des Ausgleichselements der Vorrichtung gemäß Fig. 1,
- Fig. 7: die Darstellung aus Fig. 6 wobei zusätzlich die Mitnahmeeinrichtung dargestellt ist, und
- Fig. 8: in einer schematischen Darstellung eine geschnittene Ansicht des Grundkörpers der Vorrichtung gemäß Fig. 1.

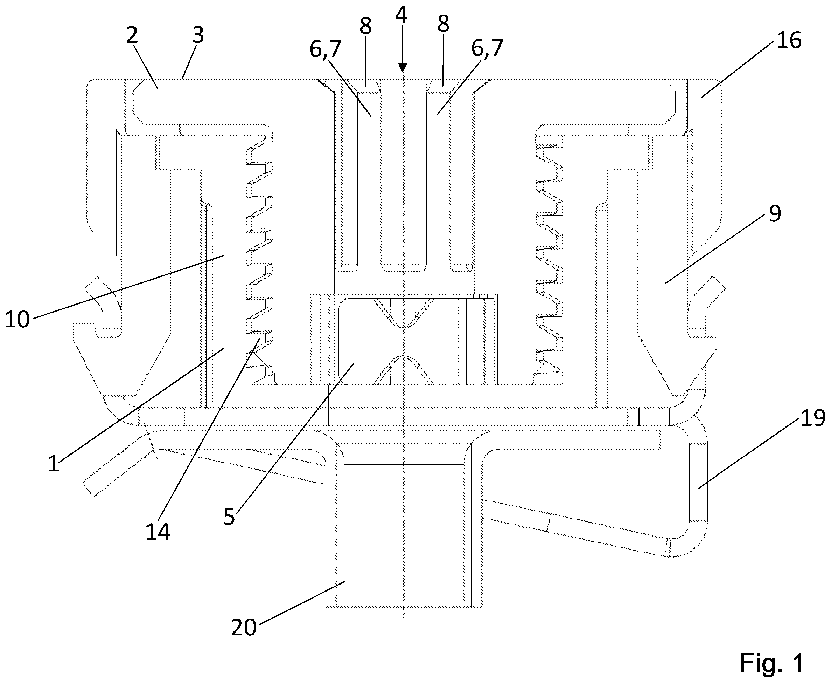

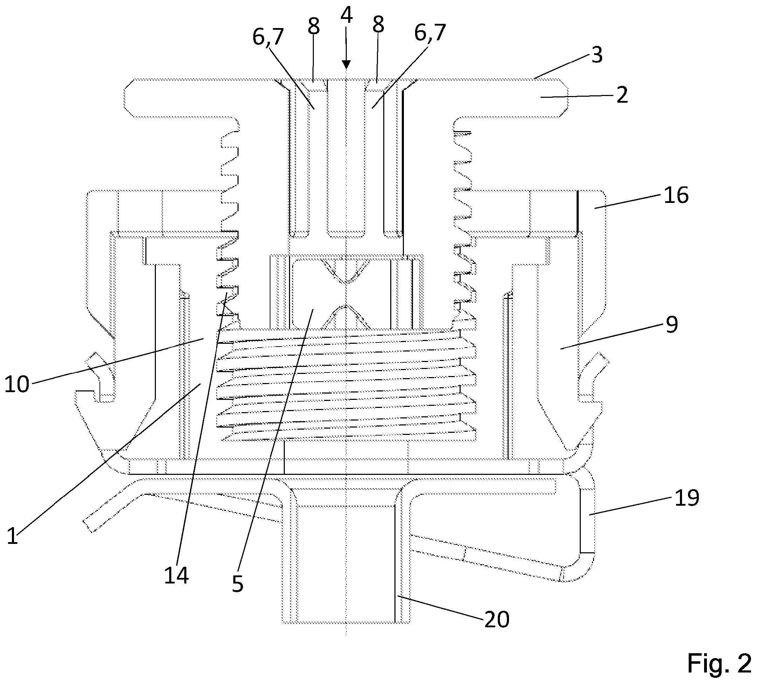

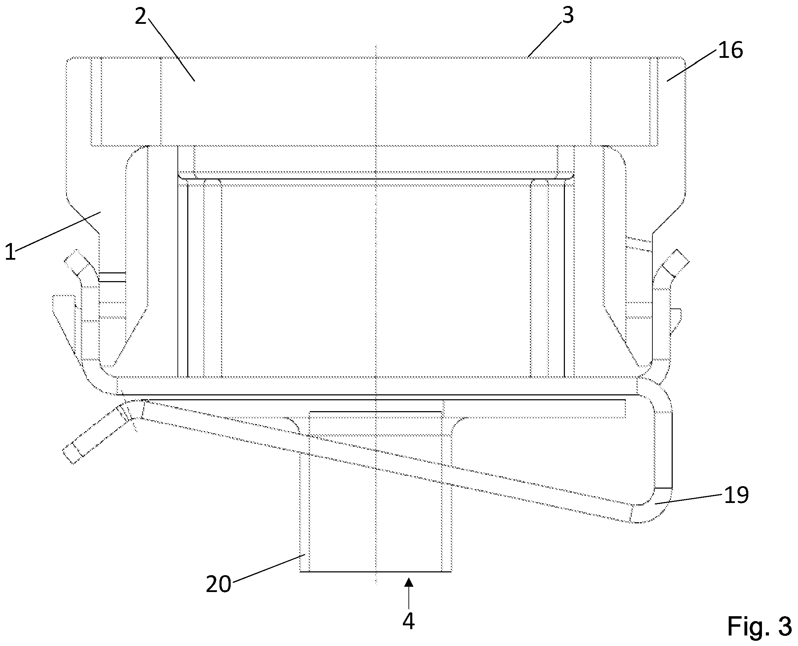

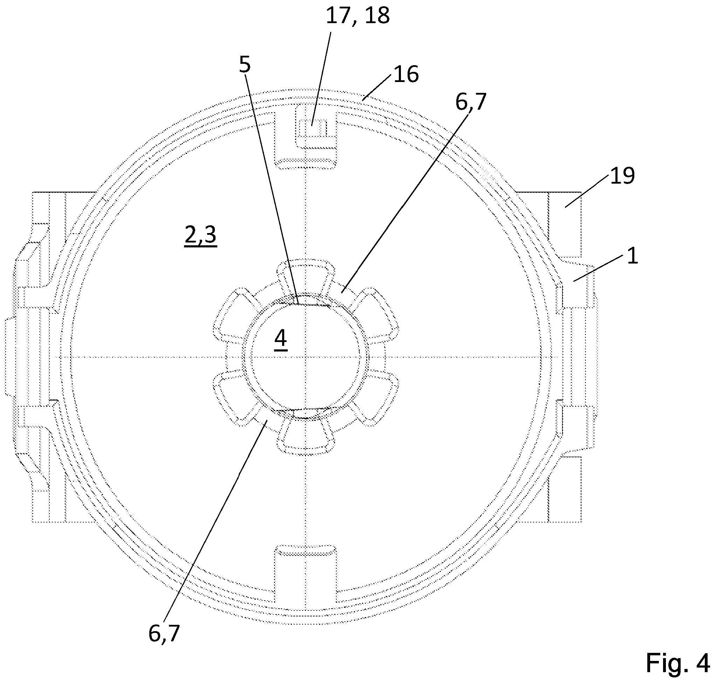

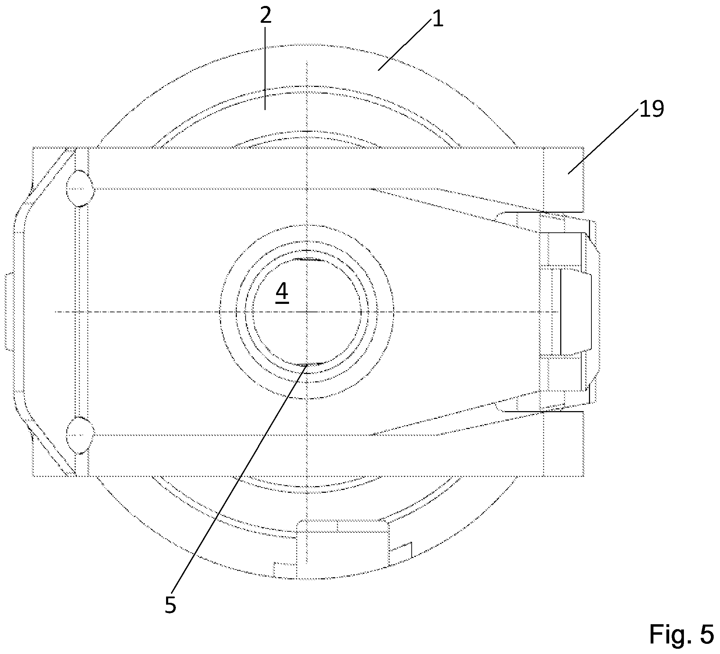

In den Fig. 1 bis 8 ist ein Ausführungsbeispiel einer erfindungsgemäßen Vorrichtung dargestellt, wobei zur Verbesserung der Übersichtlichkeit in einigen Figuren nicht jedes Bauteil mit einem Bezugszeichen versehen ist.

Die Vorrichtung dient zur Befestigung an einem nicht dargestellten Bauteil, insbesondere zum Toleranzausgleich von zwei miteinander zu verbindenden Bauteilen. Die Vorrichtung umfasst einen Grundkörper 1 und ein Ausgleichselement 2, die über ein Gewinde 14 miteinander verbunden sind. Das Ausgleichselement 2 weist eine Anschlagfläche 3 auf und eine in einem Durchgang 4 angeordnete Mitnahmeeinrichtung 5 für eine nicht dargestellte Schraube. Die Mitnahmeeinrichtung 5 ist dabei als Federklemme ausgebildet.

In dem Durchgang 4 sind mehrere Zentrierelemente 6 vorgesehen, die in diesem Ausführungsbeispiel als Zentrierrippen 7 realisiert sind. Diese ragen in Radialrichtung in den Durchgang 4 hinein und erstrecken sich parallel zur Einführrichtung der Schraube bzw. zur Erstreckungsrichtung des Durchgangs 4. Somit wird eine in den Durchgang 4 eingeführte Schraube derart ausgerichtet, dass ein Verkanten an der Mitnahmeeinrichtung 5 verhindert wird. Des Weiteren ist zu erkennen, dass die freien Enden der Zentrierrippen 7 eine Fase 8 aufweisen, die als Einführhilfe für die Schraube dient.

In dem hier gezeigten Ausführungsbeispiel sind die Zentrierrippen 7 einteilig mit dem Ausgleichselement 2 ausgebildet, wobei dies nicht zwangsweise der Fall sein muss.

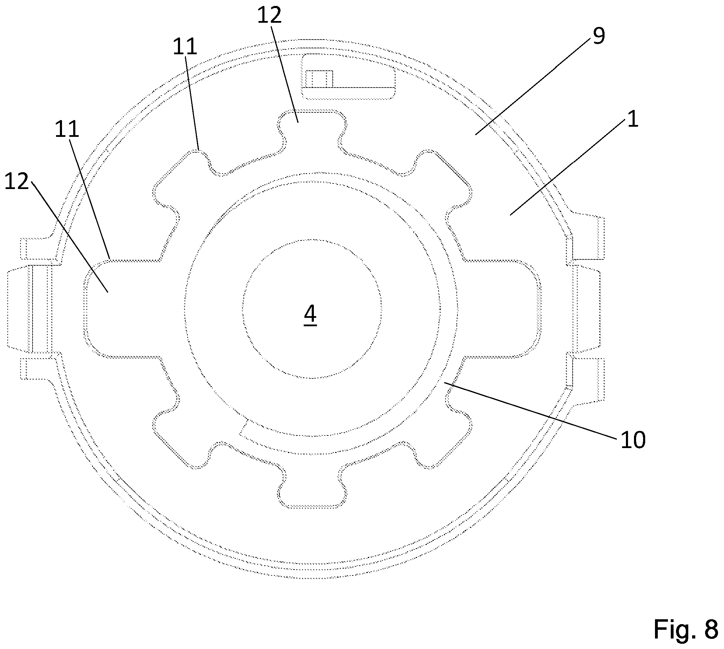

Des Weiteren ist zu erkennen, dass der Grundkörper 1 zweiteilig ausgebildet ist, nämlich aus einem Haltering 9 und einem darin angeordneten Grundelement 10 besteht. Insbesondere Figur 8 ist zu entnehmen, dass der Haltering 9 mehrere Nuten 11 aufweist und dass an dem Grundelement 10 mehrere dazu komplementär ausgebildete Rippen 12 vorgesehen sind. Dabei wird darauf hingewiesen, dass bereits eine einzige Nut 11 mit einer einzigen Rippe 12 ausreichend sein könnte.

Durch die Nuten 11 und die Rippen 12 wird eine formschlüssige Verbindung zwischen Grundelement 10 und Haltering 9 ermöglicht. Des Weiteren ist zu erkennen, dass zwei unterschiedliche Ausgestaltungen von Nuten 11 und dazu komplementären Rippen 12 vorgesehen sind. Dadurch wird erreicht, dass das Grundelement 10 lediglich in zwei definierten Ausrichtungen gegenüber dem Haltering 9 angeordnet werden kann.

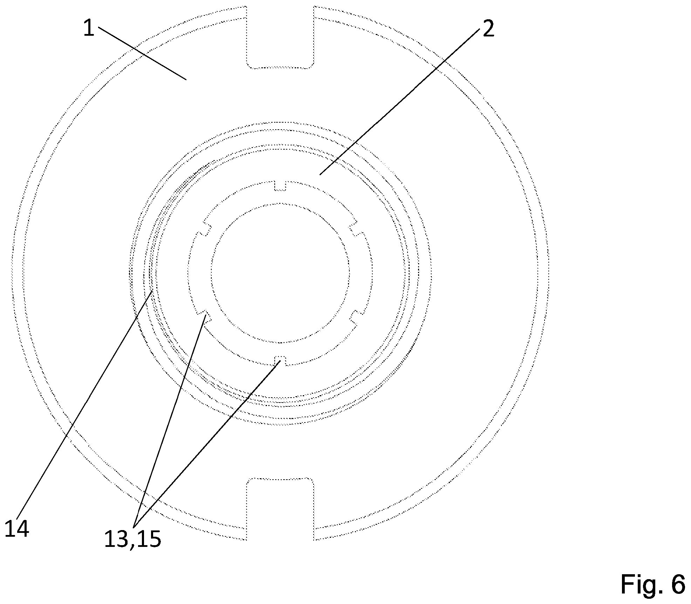

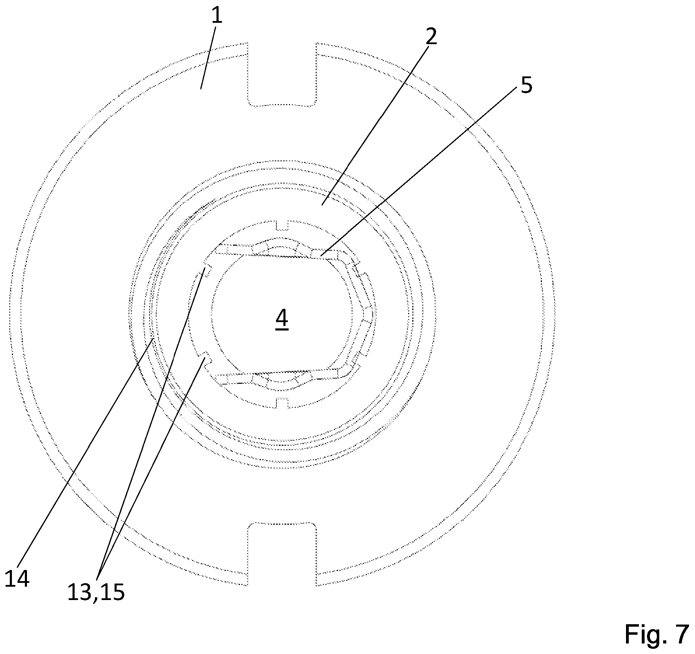

Insbesondere den Fig. 6 und 7 ist zu entnehmen, dass die Mitnahmeeinrichtung 5 formschlüssig an dem Ausgleichselement 2 angeordnet ist. Hierzu sind an dem Ausgleichselement 2 mehrere Befestigungselemente 13 ausgebildet, die in Radialrichtung in den Durchgang 4 hineinragen. Die Mitnahmeeinrichtung 5 kann Ausnehmungen aufweisen, in welche die als Befestigungsrippen 15 ausgebildeten Befestigungselemente 13 hineinragen. Alternativ oder zusätzlich kann die Mitnahmeeinrichtung 5 an den Befestigungselementen 13 angreifen, beispielsweise mit einer Kante. Wesentlich ist, dass ein Formschluss zwischen Mitnahmeeinrichtung 5 und Ausgleichselement 2 realisiert ist, so dass über die Mitnahmeeinrichtung 5 eine Drehbewegung von der Schraube zuverlässig auf das Ausgleichselement 2 übertragbar ist, ohne dass die Mitnahmeeinrichtung 5 verrutscht.

In den Figuren 1 bis 3 ist zu erkennen, dass der das Ausgleichselement 2 umgebende Rand 16 erhöht ausgebildet ist, d.h. er erstreckt sich zumindest teilweise in Richtung des Ausgleichselements 2, so dass der Rand 16 das Ausgleichselement 2 seitlich zumindest teilweise umschließt, wenn das Ausgleichselement 2 vollständig in den Grundkörper 1 eingeschraubt ist. Weiterhin ist an dem Grundkörper 1 ein als Transportsicherung dienendes elastisches Element 17 angeordnet, das in eine Ausnehmung 18 des Ausgleichselements 2 eingreift, wenn diese zumindest im Wesentlichen vollständig in den Grundkörper 1 eingeschraubt ist.

Um die Vorrichtung seitlich auf ein Bauteil aufschieben zu können, ist an dem Grundkörper 1 eine Halteklammer 19 ausgebildet. Des Weiteren ist an der Halteklammer 19 ein Mutternelement 20 vorgesehen, in das die Schraube eingedreht werden kann.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Grundkörper
- 2: Ausgleichselement
- 3: Anschlagfläche
- 4: Durchgang
- 5: Mitnahmeeinrichtung
- 6: Zentrierelement
- 7: Zentrierrippe
- 8: Fase
- 9: Haltering
- 10: Grundelement
- 11: Nut
- 12: Rippe
- 13: Befestigungselement
- 14: Gewinde
- 15: Befestigungsrippe
- 16: Rand
- 17: elastisches Element
- 18: Ausnehmung
- 19: Halteklammer
- 20: Mutternelement

## Patentansprüche

1. Vorrichtung zur Befestigung an einem Bauteil mit einem Grundkörper (1) und einem Ausgleichselement (2), wobei das Ausgleichselement (2) mit dem Grundkörper (1) über ein Gewinde (14) verbunden ist, wobei das Ausgleichselement (2) einen Durchgang (4) mit einer Mitnahmeeinrichtung (5) für eine Schraube aufweist, wobei der Grundkörper (1) ein Grundelement (10) und einen formschlüssig mit dem Grundelement (10) verbundenen Haltering (9) aufweist, wobei der Haltering (9) mindestens eine Nut (11) aufweist und wobei das Grundelement (10) mindestens eine zu der Nut (11) komplementär ausgebildete Rippe (12) aufweist, um einen Formschluss zu erzielen,
**dadurch gekennzeichnet, dass** mindestens zwei Nuten (11) eine unterschiedliche Form aufweisen und/oder dass mindestens zwei Rippen (12) eine unterschiedliche Form aufweisen.

2. Vorrichtung nach Anspruch 1, **dadurch gekennzeichnet, dass** in dem Durchgang (4) mindestens ein Zentrierelement (6) zur Ausrichtung der Schraube ausgebildet ist

3. Vorrichtung nach Anspruch 2, **dadurch gekennzeichnet, dass** das Zentrierelement (6) als in Radialrichtung in den Durchgang (4) hineinreichende Zentrierrippe (7) ausgebildet ist.

4. Vorrichtung nach Anspruch 3, **dadurch gekennzeichnet, dass** mehrere Zentrierrippen (7), vorzugsweise jeweils äquidistant zu der nächstliegenden Zentrierrippe (7), in Umfangsrichtung des Durchgangs (4) angeordnet sind.

5. Vorrichtung nach einem der Ansprüche 2 bis 4, **dadurch gekennzeichnet, dass** das Zentrierelement (6) einteilig mit dem Ausgleichselement (2) ausgebildet ist.

6. Vorrichtung nach einem der Ansprüche 2 bis 5, **dadurch gekennzeichnet, dass** das freie Ende des Zentrierelements (6) eine Fase (8) als Einführhilfe für die Schraube aufweist.

7. Vorrichtung nach einem der Ansprüche 1 bis 6, **dadurch gekennzeichnet, dass** die Mitnahmeeinrichtung (5) als Federelement bzw. Federklemme ausgebildet ist.

8. Vorrichtung nach einem der Ansprüche 1 bis 7, **dadurch gekennzeichnet, dass** die Mitnahmeeinrichtung (5) formschlüssig mit dem Ausgleichselement (2) verbunden ist.

9. Vorrichtung nach einem der Ansprüche 1 bis 8, **dadurch gekennzeichnet, dass** mindestens ein Befestigungselement (13) in Radialrichtung in den Durchgang (4) hineinragt, um die Mitnahmeeinrichtung (5) formschlüssig mit dem Ausgleichselement (2) zu verbinden.

10. Vorrichtung nach Anspruch 9, **dadurch gekennzeichnet, dass** das Befestigungselement (13) als Befestigungsrippe (15) ausgebildet ist.

## Claims

1. A device for fastening to a component comprising a main body (1) and a compensating element (2), the compensating element (2) being connected to the main body (1) by a thread (14), the compensating element (2) comprising a passage (4) having a driver apparatus (5) for a screw, the main body (1) comprising a main element (10) and a retaining ring (9) connected to the main element (10) in a form fit, the retaining ring (9) comprising at least one groove (11) and the main element (10) comprising at least one rib (12) which is designed to be complementary to the groove (11) in order to obtain a form fit,
**characterized in that** at least two grooves (11) have a different shape and/or **in that** at least two ribs (12) have a different shape.

2. The device according to claim 1, **characterized in that** at least one centering element (6) for aligning the screw is formed in the passage (4).

3. The device according to claim 2, **characterized in that** the centering element (6) is designed as a centering rib (7) which extends into the passage (4) in the radial direction.

4. The device according to claim 3, **characterized in that** a plurality of centering ribs (7), which are preferably each equidistant from the closest centering rib (7), are arranged in the circumferential direction of the passage (4).

5. The device according to any of claims 2 to 4, **characterized in that** the centering element (6) is formed in one piece with the compensating element (2).

6. The device according to any of claims 2 to 5, **characterized in that** the free end of the centering element (6) comprises a chamfer (8) as an insertion aid for the screw.

7. The device according to any of claims 1 to 6, **characterized in that** the driver apparatus (5) is designed as a spring element or spring clamp.

8. The device according to any of claims 1 to 7, **characterized in that** the driver apparatus (5) is connected to the compensating element (2) in a form fit.

9. The device according to any of claims 1 to 8, **characterized in that** at least one fastening element (13) projects into the passage (4) in the radial direction in order to connect the driver apparatus (5) to the compensating element (2) in a form fit.

10. The device according to claim 9, **characterized in that** the fastening element (13) is designed as a fastening rib (15).

## Revendications

1. Dispositif de fixation à un composant comprenant un corps de base (1) et un élément de compensation (2), dans lequel l'élément de compensation (2) est relié au corps de base (1) par l'intermédiaire d'un filetage (14), dans lequel l'élément de compensation (2) comprend un passage (4) avec un dispositif d'entraînement (5) pour une vis, dans lequel le corps de base (1) comprend un élément de base (10) et une bague de maintien (9) reliée par complémentarité de forme à l'élément de base (10), dans lequel la bague de maintien (9) comprend au moins une rainure (11) et dans lequel l'élément de base (10) comprend au moins une nervure (12) de forme complémentaire à la rainure (11) afin d'obtenir une liaison par complémentarité de forme,
**caractérisé en ce qu'**au moins deux rainures (11) présentent une forme différente et/ou **en ce qu'**au moins deux nervures (12) présentent une forme différente.

2. Dispositif selon la revendication 1, **caractérisé en ce qu'**au moins un élément de centrage (6) destiné à aligner la vis est formé dans le passage (4).

3. Dispositif selon la revendication 2, **caractérisé en ce que** l'élément de centrage (6) est formé en tant que nervure de centrage (7) s'étendant dans le passage (4) dans la direction radiale.

4. Dispositif selon la revendication 3, **caractérisé en ce que** plusieurs nervures de centrage (7), de préférence respectivement équidistantes de la nervure de centrage (7) la plus proche, sont disposées dans la direction circonférentielle du passage (4).

5. Dispositif selon l'une des revendications 2 à 4, **caractérisé en ce que** l'élément de centrage (6) est formé d'un seul tenant avec l'élément de compensation (2).

6. Dispositif selon l'une des revendications 2 à 5, **caractérisé en ce que** l'extrémité libre de l'élément de centrage (6) comprend un chanfrein (8) servant d'aide à l'insertion de la vis.

7. Dispositif selon l'une des revendications 1 à 6, **caractérisé en ce que** le dispositif d'entraînement (5) est formé en tant qu'élément à ressort ou pince à ressort.

8. Dispositif selon l'une des revendications 1 à 7, **caractérisé en ce que** le dispositif d'entraînement (5) est relié par complémentarité de forme à l'élément de compensation (2).

9. Dispositif selon l'une des revendications 1 à 8, **caractérisé en ce qu'**au moins un élément de fixation (13) fait saillie dans le passage (4) dans la direction radiale afin de relier par complémentarité de forme le dispositif d'entraînement (5) à l'élément de compensation (2).

10. Dispositif selon la revendication 9, **caractérisé en ce que** l'élément de fixation (13) est formé en tant que nervure de fixation (15).
